# EUROPEAN PATENT APPLICATION

(11) **EP 4 636 552 A1**
(43) Date of publication of application: **22.10.2025**
(21) Application number: 24171357.7
(22) Date of filing: 19.04.2024
(51) Int. Cl.: G06F 3/0481, G06F 3/0482

(54) **METHOD AND SYSTEM FOR NAVIGATING DECISION TREE IN USER INTERFACE**

(71) Applicant: Siemens Aktiengesellschaft, 80333 München (DE)
(72) Inventor: Rodrigues, Aquil, 576108 Udupi, Karnataka (IN); Tripathi, Utkarsh, 560100 Bangalore, Karnataka (IN)
(74) Representative: Isarpatent

(57) **Abstract**

Disclosed is a method and a system for navigating a decision tree in a user interface. The method comprises presenting a sequence of user-interaction elements corresponding to nodes within the decision tree based on a predefined traversal logic. The method further comprises detecting a deferral action for a currently presented user-interaction element. The method further comprises adjusting the predefined traversal logic of the decision tree in response to the deferral action. The method further comprises presenting subsequent user-interaction elements according to the predefined traversal logic, for receiving user selections and marking the corresponding node as complete. The method further comprises re-presenting the user-interaction elements as previously deferred when rest of the nodes of the decision tree are marked as complete. The method further comprises terminating the navigation of the decision tree when all of the nodes of the decision tree are marked as complete.

## Description

The present invention pertains to the field of user interfaces for software applications, more specifically to a method and system for navigating through decision trees in such interfaces, facilitating a non-linear progression through user decisions or selections.

Wizards have long been a fundamental element of user interfaces, designed to guide users through complex processes by presenting a series of questions or decision points one at a time. This user interface pattern simplifies intricate procedures by segmenting them into smaller, more manageable steps, thereby aiding in the completion of complex tasks. Various applications utilize some form of a wizard to facilitate user decision-making processes. Typically, these wizards conclude in a compilation of user choices, which then form the basis for a configuration setup or a specific outcome. Embedded within these wizards is often a decision tree structure, where each user interface element represents a node in the tree, and user responses dictate the traversal from one node to the next, enabling the system to process inputs and make predictions or decisions based on a set of inter-dependent parameters.

However, the design and engineering of such wizards, especially those based on decision trees, present significant challenges. The intricate dependencies among the nodes often lead to questions being presented out of sequence, thereby complicating the testing process and increasing the time and effort required. Moreover, the linear nature of these traditional wizards, which are generally referred to as linear wizards,' limits user flexibility in navigating the decision tree. Users are compelled to answer questions in a fixed order without the ability to skip or defer less relevant questions to a later stage. This rigidity can contribute to decision fatigue and human error, as users are forced to engage with the wizard in a monotonous and inflexible manner, without the option to prioritize questions based on their immediate relevance or context.

Conventional solutions to these challenges have primarily focused on refining design and logical sequencing of the nodes in the decision tree. However, these efforts have not adequately addressed the fundamental limitations of linear wizards. Despite improvements in the underlying decision algorithms and user interface designs, users remain constrained by the linear progression through the decision tree, with little to no ability to influence the order in which decisions are presented or to defer decisions until a more opportune time. This approach to wizard design overlooks the dynamic nature of user needs and the contextual factors that can influence decision-making processes, ultimately restricting the effectiveness and user-friendliness of the wizard.

Given these limitations, there is a need for a more adaptable and user-centric approach to navigating decision trees within user interfaces. The present invention seeks to address these shortcomings by introducing a method that allows for non-linear progression through decision points, enabling users to defer decisions and prioritize nodes based on their preferences or context. This approach enhances user engagement, reduce decision fatigue, and provide a more intuitive and flexible navigation experience, thereby overcoming the constraints of traditional linear wizards and offering a significant advancement in user interface design.

The object of the present invention is achieved by a computer-implemented method for navigating a decision tree in a user interface. The method comprises presenting, via the user interface, a sequence of user-interaction elements corresponding to nodes within the decision tree based on a predefined traversal logic therefor. Herein, each node represents a decision point with two or more user-selectable options associated therewith. The method further comprises detecting a deferral action for a currently presented user-interaction element. The deferral action is indicative of postponing the decision associated with the node corresponding to the currently presented user-interaction element. The method further comprises adjusting the predefined traversal logic of the decision tree in response to the deferral action, to temporarily stop presentation of the currently presented user-interaction element and user-interaction elements corresponding to dependent nodes thereof. The method further comprises presenting, via the user interface, subsequent user-interaction elements according to the predefined traversal logic, for receiving user selections for the two or more user-selectable options associated therewith. Herein, each user selection results in marking the corresponding node as complete. The method further comprises re-presenting, via the user interface, the user-interaction elements as previously deferred when rest of the nodes of the decision tree are marked as complete, for receiving user selections for the two or more user-selectable options associated therewith. Herein, each user selection results in marking the corresponding node as complete. The method further comprises terminating the navigation of the decision tree when all of the nodes of the decision tree, including the nodes corresponding to the user-interaction elements previously deferred, are marked as complete.

In one or more embodiments, the method further comprises adjusting the predefined traversal logic based on user pre-assigned preferences to each node.

In one or more embodiments, the method further comprises adjusting the predefined traversal logic based on one or more of user behaviour patterns, time spent on specific user-interaction element, frequency of deferral actions, and operational state of the user interface.

In one or more embodiments, the method further comprises allowing a user, via the user interface, to mark a user-interaction element as favourite. The method also comprises re-presenting the user-interaction elements as previously deferred and marked as the favourite to be presented before other user-interaction elements as previously deferred, within the predefined traversal logic of the decision tree.

In one or more embodiments, the user interface is configured to provide a navigational aid to indicate a hierarchical relationship of the currently presented user-interaction element to other user-interaction elements within the decision tree.

In one or more embodiments, the user interface is configured to provide a progress indication to represent a ratio of nodes marked as complete to a total number of nodes, including the nodes corresponding to the user-interaction elements previously deferred, in the decision tree.

In one or more embodiments, the user-interaction elements are presented as card elements in the user interface.

In one or more embodiments, the deferral action is executed, via the user interface, by a user gesture on the currently presented user-interface element.

The object of the present invention is also achieved by a system comprising one or more processing units and a memory unit communicatively coupled to the one or more processing units. Herein, the memory unit comprises a decision tree navigation module stored in the form of machine-readable instructions executable by the one or more processing units, wherein the decision tree navigation module is configured to perform aforementioned method steps for navigating a decision tree in a user interface.

The object of the present invention is further achieved by a computer program product, having machine-readable instructions stored therein, that when executed by the one or more processing units, cause the one or more processing units to perform aforementioned method steps.

Still, other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
FIG 1 is a flowchart of a method for navigating a decision tree in a user interface, in accordance with one or more embodiments of the present invention;
FIG 2 is a block diagram representation of a system for navigating a decision tree in a user interface, in accordance with one or more embodiments of the present invention;
FIG 3 is a depiction of an exemplary user interface with an exemplary user-interaction element, in accordance with one or more embodiments of the present invention;
FIG 4 is a depiction of an exemplary user interface with an exemplary user-interaction element as being provided with an exemplary user gesture, in accordance with one or more embodiments of the present invention;
FIGS 5A-5B are depictions of an exemplary user interface providing a favourite button, in accordance with one or more embodiments of the present invention;
FIG 6 is a flowchart of a process for navigating a decision tree in a user interface, in accordance with one or more embodiments of the present invention;
FIGS 7A-7D are depictions of sequential stages of the deferred tree traversal algorithm as employed in the user interface, in accordance with one or more embodiments of the present invention; and
FIGS 8A-8E are depictions of stages of prioritized deferred tree traversal algorithm, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for navigating a decision tree in a user interface are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

A decision tree, as used herein, refers to a structured model or graphical representation that simulates decision-making processes by presenting a series of branching nodes. Each node within the decision tree symbolizes a decision point or question that requires a user response from two or more selectable options. The path from one node to another is determined by the user's selections, with each decision leading to subsequent nodes or outcomes. In the context of present invention, the decision tree is implemented within a user interface, facilitating a visual and interactive method for users to make a series of related decisions, each influencing the course of action or the next set of decisions presented.

The term "user interface" refers to the means of interaction and communication between a user and a computer system, specifically in the context of navigating a decision tree. The user interface may incorporate all elements through which a user can interact with the computing system, including but not limited to visual representations of the decision tree, user-interaction elements (e.g., buttons, sliders, cards), and any visual indicators or navigational aids. The user interface is designed to present information to the user in an intuitive and accessible manner, enabling them to make selections, defer decisions, and understand their progress within the decision tree navigation process. Further, the term "navigating" refers to the act of progressing through the decision tree within the user interface by making selections at various decision points (nodes), deferring decisions, and prioritizing certain nodes over others. Navigating implies linear progression from one node to the next based on user selections.

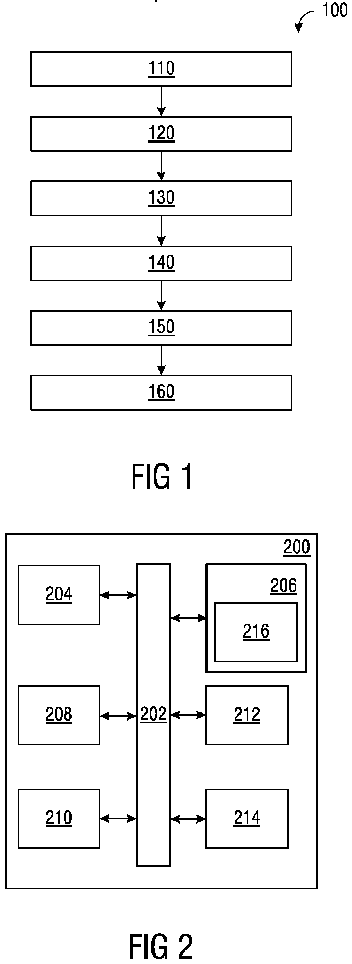

Referring to FIG 1, illustrated is a flowchart of a method (as represented by reference numeral 100) for navigating a decision tree in a user interface, in accordance with an embodiment of the present invention. The method 100 employs a deferred tree traversal mechanism which allows users to defer decisions on specific nodes and prioritize others based on their immediate relevance or user preference, thereby introducing a level of non-linearity and flexibility previously unattainable in traditional wizard interfaces. By enabling the deferral of decisions and the reordering of decision nodes based on predefined or dynamic prioritization criteria, the method 100 significantly enhance the user experience. This allows for a more personalized and contextually relevant navigation through complex decision-making processes, reducing decision fatigue and increasing the efficiency of information collection and processing. The method 100 dynamically adjust the traversal path through the decision tree in response to user actions, such as deferring decision points and marking certain nodes as high-priority. This dynamic adjustment ensures that users are always presented with the most relevant and immediate decision points, while still maintaining the logical integrity of the decision tree and ensuring that all necessary decisions are eventually made.

Referring to FIG 2, illustrated is a block diagram of a system 200 for navigating a decision tree in a user interface, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for navigating a decision tree in a user interface. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or non-volatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like, without any limitations.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for navigating a decision tree in a user interface. In particular, the memory unit 206 includes a decision tree navigation module 216 to perform steps for the said purpose.

Referring to FIGS 1-2 in combination, various steps of the method 100 (as described hereinafter), which may be executed in the system 200, or specifically in the processing unit 204 of the system 200, for navigating a decision tree in a user interface, are described. It may be appreciated that although the method 100 is illustrated and described as a sequence of steps, it may be contemplated that various embodiments of the method 100 may be performed in any order or different combinations, and need not include all of the illustrated steps.

At step 110, the method 100 includes presenting, via the user interface, a sequence of user-interaction elements corresponding to nodes within the decision tree based on a predefined traversal logic therefor, wherein each node represents a decision point with two or more user-selectable options associated therewith. Herein, the user interface serves as the medium through which the sequence of user-interaction elements is displayed to the user. Each user-interaction element is a visual representation of a node within the decision tree. These nodes are the junctions at which the user is required to make a choice, thus influencing the subsequent path of navigation through the decision tree. The predefined traversal logic is the algorithm that defines the order and manner in which the user-interaction elements are presented to the user via the user interface. This logic takes into account the hierarchical structure of the decision tree, ensuring that the user-interaction elements are displayed in a sequence that adheres to the dependencies and relationships between the nodes.

Each node within the decision tree is characterized by a decision point, which is the query or prompt presented to the user for response. The principle of each decision point is to obtain a decision from the user, thereby requiring at least two user-selectable options. These options are the potential paths that the user can take in response to the decision point, with each selection leading to a different trajectory through the decision tree. Such methodical presentation of the user-interaction elements according to the predefined traversal logic ensures a coherent and logical progression through the decision tree, guiding the user from one decision point to the next. This structured approach enables the user to engage with the decision tree in a manner that is both intuitive and conducive to effective decision-making, laying the groundwork for the subsequent steps of the method 100 of the present invention.

In the present embodiments, the user-interaction elements are presented as card elements in the user interface. This specific presentation format is chosen to enhance the visual organization and accessibility of the decision points within the decision tree. Each card element corresponds to a node within the decision tree and includes the information and choices pertaining to that node. The use of card elements in the user interface for representing user-interaction elements facilitates a clear and intuitive navigation experience. Card elements, by their design, provide a level of visual distinction between different decision points, making it easier for users to focus on one decision at a time. This is particularly beneficial in complex decision trees where multiple decision points may be presented in close succession. The physical attributes of card elements, such as size, colour, and position, can also be utilized to convey additional information about the decision point, such as its priority, status (active, deferred, completed), or its relationship to other nodes in the decision tree.

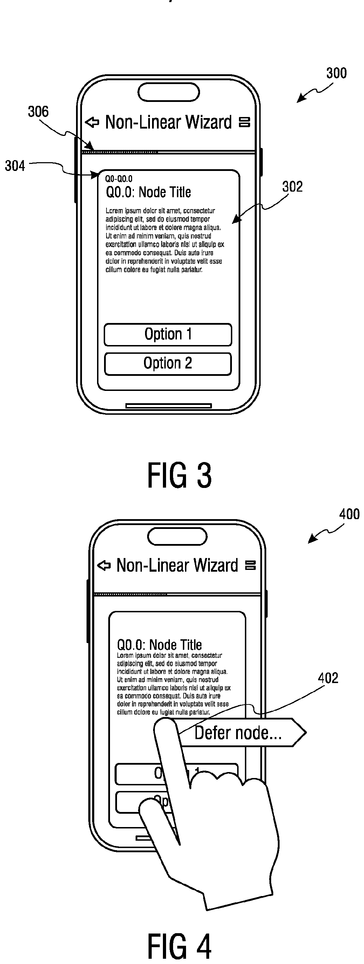

FIG 3 illustrates an exemplary user interface (as represented by reference numeral 300) with an exemplary user-interaction element 302 in the form of a card element. The card interface is analogue of a single page on the classical wizard. The user interface is configured to display the user-interaction element 302 that corresponds to a node within the decision tree. This node is represented by a Node Title and contains a Node Description, which together provide the context and information required for the user to make an informed decision. The user-interaction element 302, as displayed, presents two or more user-selectable options, such as Option 1 and Option 2, enabling the user to make a selection in response to the decision point. The card element of the user-interaction element 302 is designed to facilitate deferral actions, where the user can defer the decision associated with the node by performing a gesture on the card element, such as swiping it away (as discussed later in reference to FIG 4 in more detail).

At step 120, the method 100 includes detecting a deferral action for a currently presented user-interaction element, wherein the deferral action is indicative of postponing the decision associated with the node corresponding to the currently presented user-interaction element. This process is integral to the method 100, as it introduces flexibility and user control into the decision-making process within the decision tree. The deferral action is a user-initiated command, signifying the user's intent to postpone the decision required at the current juncture represented by the node associated with the currently presented user-interaction element.

The currently presented user-interaction element, displayed via the user interface, represents a specific node within the decision tree. Each node, as outlined in the method 100, symbolizes a decision point requiring user input. The deferral action allows the user to temporarily bypass this decision point, effectively delaying the selection of any of the user-selectable options associated with the currently presented user-interaction element. This postponement is indicative of the user's need or preference to address this particular decision point at a later stage in the navigation process, possibly after other decision points have been resolved.

Upon detecting the deferral action, the system 200 adjusts its operations (specifically the predefined traversal logic of the decision tree is adjusted) to accommodate the deferred status of the node associated with the currently presented user-interaction element. This adjustment ensures that the navigation path through the decision tree reflects the user's deferral action, maintaining the logical flow of decision points while allowing for the non-linear progression desired by the user. This allows users to alter the decision-making process according to their immediate preferences or the requirements of the context in which they are operating.

In an embodiment, the deferral action is executed, via the user interface, by a user gesture on the currently presented user-interface element. This user gesture is a deliberate physical interaction initiated by the user, such as a swipe, tap, or drag, performed directly on the user-interface element that is currently in focus. Herein, the user-interface element corresponds to a specific node within the decision tree, representing a decision point that the user has chosen to defer. The user gesture serves as a clear indication of the user's intent to defer the decision associated with the currently presented user-interface element, triggering the system 200 to adjust traversal logic of the decision tree accordingly. Such gesture-based deferral option provides users with a natural and efficient means to postpone decisions without disrupting the flow of interaction. In general, the gesture-based deferral option results in a user-friendly interface that prioritizes ease of use and adaptability.

FIG 4 illustrates an exemplary user interface (as represented by reference numeral 400) presenting a user-interface element 402 as being provided with an exemplary user gesture 404 in the form of a swipe (e.g., on a touchscreen). This interaction is detected by the system as a deferral action, prompting an adjustment in the predefined traversal logic of the decision tree. Subsequent user-interaction elements are then presented in accordance with this adjusted traversal logic, ensuring that the navigation through the decision tree remains consistent with the user's actions and preferences.

At step 130, the method 100 includes adjusting the predefined traversal logic of the decision tree in response to the deferral action, to temporarily stop presentation of the currently presented user-interaction element and user-interaction elements corresponding to dependent nodes thereof. This adjustment is required when a user executes the deferral action on the currently presented user-interaction element, indicating a desire to postpone the decision associated with that element. In response, the system 200 modifies the traversal logic to accommodate this user preference, temporarily stopping the presentation of the deferred user-interaction element as well as any subsequent user-interaction elements that are dependent on the deferred decision point.

In particular, herein, the predefined traversal logic of the decision tree, which generally defines the sequential presentation of user-interaction elements based on structure and node dependencies of the decision tree, is dynamically adjusted based on the deferral action. This may include reconfiguring the navigation path to bypass the deferred user-interaction element and its dependent nodes, effectively removing them from the immediate decision-making sequence. This reconfiguration ensures that the user is not prompted to make decisions on dependent nodes for which possible prerequisites may still be unaddressed in the deferred user-interaction element. By temporarily removing deferred decisions and their dependencies from the navigation sequence, the system 200 ensures that the user can continue to engage with the decision tree without being hindered by postponed decision points. This facilitates a non-linear approach to navigating the decision tree, offering users a more intuitive and accommodating interface for complex decision-making scenarios.

In some embodiments, the method 100 further includes adjusting the predefined traversal logic based on user pre-assigned preferences to each node. The user pre-assigned preferences refer to user-defined priorities or importance levels assigned to individual nodes within the decision tree before or during the navigation process. The system 200, upon receiving these user pre-assigned preferences, dynamically modifies the traversal logic to align with the user's specified priorities. This involves reordering the presentation sequence of user-interaction elements so that nodes with higher user-assigned preferences are presented earlier in the navigation process, while those with lower preferences might be deferred until the higher-priority decisions have been addressed. This adjustment of the predefined traversal logic may evolve throughout the navigation process as the user interacts with the decision tree and potentially updates their preferences based on new information, insights, or changes in their situational context. This adjustment process allows for a personalized navigation experience through the decision tree, reflecting the individual user's priorities and preferences at various decision points.

In some embodiments, the method 100 further includes adjusting the predefined traversal logic based on one or more of user behaviour patterns, time spent on specific user-interaction element, frequency of deferral actions, and operational state of the user interface. That is, the predefined traversal logic of the decision tree is further refined through adjustments based on various dynamic factors, including the user behaviour patterns, the amount of time spent on specific user-interaction elements, the frequency of deferral actions taken by the user, and the operational state of the user interface. User behaviour patterns includes a range of user interactions with the decision tree, such as the choices made at different nodes, the paths frequently travelled within the decision tree, and the like, that may indicate user preferences or indecisions. By analysing these patterns, the system 200 can infer the user's implicit preferences, allowing for adjustment of the traversal logic to align with the user's natural decision-making processes. The time spent on specific user-interaction elements serves as an indicator of the user's engagement level, difficulty in making decisions, or the need for additional information. Prolonged interaction with a particular node suggests that the user may value or struggle with that decision point, prompting the system 200 to adjust the traversal logic in a manner that provides additional support or information to aid the decision-making process. The frequency of deferral actions, where the user opts to postpone decisions at certain nodes, serves as an indicator of the user's readiness to address specific decision points. A high frequency of deferral at particular nodes may prompt the system 200 to reevaluate the presentation order of these nodes or to introduce mechanisms that assist the user in resolving these deferred decisions more effectively. The operational state of the user interface, including factors such as system responsiveness, user interface load times, and the availability of decision-support tools or information, also influences the adjustment of the traversal logic. Adjustments may be made to the traversal logic to optimize performance of the user interface, reducing cognitive load and decision fatigue for the user. This adaptive adjustment enables a responsive and user-tailored navigation experience within the decision tree, enhancing efficiency and user satisfaction of the decision-making process.

In some advanced implementation of the present invention, the predefined traversal logic of the decision tree is further refined through adjustments based on user context, as interpreted by external algorithms. These external algorithms enhance the responsiveness and adaptability of the decision tree navigation by incorporating an analysis of the user's current context to inform the prioritization of nodes. For example, AI/ML algorithms may be employed to analyse various contextual indicators, using data such as the user's previous interactions within the decision tree, the time of day, or any other contextual information that may be relevant to the decision-making process. These algorithms leverage patterns derived from this data to infer the current context of the user, enabling the system 200 to dynamically adjust the priorities of nodes within the decision tree to align with the user's inferred needs or preferences. Additionally, simpler algorithms may also be utilized to monitor the operational state of the system itself, such as the performance metrics or the status of connected systems, which could influence the relevance and priority of certain nodes within the decision tree. For instance, if the system detects that a particular set of decisions is frequently revisited or adjusted by users under specific system states, it may automatically elevate the priority of those decisions, presenting them earlier in the navigation process. Through these contextual adjustments to the predefined traversal logic, the system can offer a more tailored and efficient navigation path within the decision tree.

At step 140, the method 100 includes presenting, via the user interface, subsequent user-interaction elements according to the predefined traversal logic, for receiving user selections for the two or more user-selectable options associated therewith, wherein each user selection results in marking the corresponding node as complete. That is, following the adjustment of the predefined traversal logic in response to any deferral actions, the system 200 continues by presenting, via the user interface, subsequent user-interaction elements. These elements are presented in accordance with the adjusted or original predefined traversal logic, which defines the sequence under which each node within the decision tree is presented. Each subsequent user-interaction element corresponds to a node within the decision tree not affected by prior deferral actions and is presented to the user for engagement. The presentation of these subsequent user-interaction elements facilitates the progression through the decision tree.

As previously discussed, each user-interaction element provides two or more user-selectable options, which represent the choices available at that particular decision point. The user is prompted to make a selection among these options, with each selection directly impacting the path taken through the decision tree. This selection process determines the subsequent nodes and decision points the user will encounter while navigating the decision tree. Now, each user selection at a decision point results in marking the corresponding node within the decision tree as complete. This marking serves as an acknowledgment of the user's decision, effectively resolving the decision point and allowing the navigation process to proceed to the next node as per the predefined traversal logic.

At step 150, the method 100 includes re-presenting, via the user interface, the user-interaction elements as previously deferred when rest of the nodes of the decision tree are marked as complete, for receiving user selections for the two or more user-selectable options associated therewith, wherein each user selection results in marking the corresponding node as complete. That is, for progression of the method 100, the user-interaction elements that were previously deferred by the user are re-presented. This action occurs once the rest of the nodes within the decision tree, not subject to deferral, have been addressed and marked as complete. This representation ensures that decisions which were postponed earlier in the navigation process are revisited. It may be understood that the deferred user-interaction elements, each corresponding to a specific node within the decision tree, are reintroduced to the user in a sequence determined by the predefined traversal logic.

Upon the re-presentation of these deferred user-interaction elements, the user is prompted once again to engage with each decision point, making selections from the two or more user-selectable options provided. These options represent the possible choices or paths the user can take at each deferred decision point, influencing the subsequent navigation path within the decision tree. It may be noted that each selection made by the user in response to the represented user-interaction elements results in the corresponding node within the decision tree being marked as complete. This effectively closes the loop on deferred decisions and ensures that no node within the decision tree remains unaddressed by the conclusion of the navigation process. This methodical approach to handling deferred decisions provides a flexible and user-centric navigation experience. By allowing for the deferral of decisions and ensuring their eventual re-presentation and resolution, the present invention accommodates user preferences and situational needs while maintaining the structural and logical integrity of the decision-making process within the decision tree.

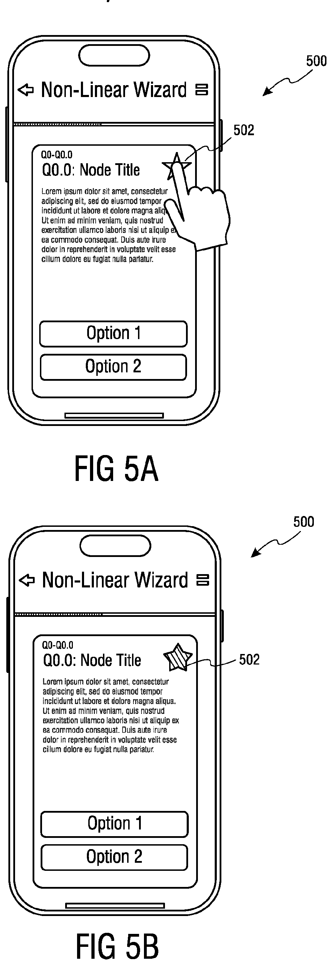

In some embodiment, the method 100 further includes allowing a user, via the user interface, to mark a user-interaction element as favourite. FIGS 5A-5B illustrate a user interface (as represented by reference numeral 500), with the user interface 500 providing a favourite button 502 selectable by the user (as shown in FIG 5A), and the favourite button 502 being adapted to highlight upon selection (as shown in FIG 5B). This functionality provides users with a means to prioritize specific decision points that they deem particularly important or wish to address promptly. When a user-interaction element is marked as favourite, it is effectively assigned the highest level of priority within the predefined traversal logic of the decision tree, ensuring its preferential presentation in the navigation sequence. The method 100 also includes representing the user-interaction elements as previously deferred and marked as the favourite to be presented before other user-interaction elements as previously deferred, within the predefined traversal logic of the decision tree. As discussed, the method 100 includes the representation of user-interaction elements that were previously deferred during the navigation process. This includes those elements marked as favourites by the user. As per the present embodiment, the user-interaction elements marked as favourites are presented ahead of other deferred elements when the navigation returns to address deferred decisions. This ensures that user-interaction elements marked as favourites are given precedence, allowing users to make decisions on these prioritized points first once the navigation cycle returns to deferred elements.

At step 160, the method 100 includes terminating the navigation of the decision tree when all of the nodes of the decision tree, including the nodes corresponding to the user-interaction elements previously deferred, are marked as complete. That is, when all of the nodes within the decision tree, including those corresponding to user-interaction elements that were previously deferred, are marked as complete, the process ends. This termination point is reached once the user has engaged with and made selections for every decision point represented by the nodes within the decision tree, thereby resolving all pending decisions. The process of marking nodes as complete, whether they were presented in the initial navigation sequence or reintroduced after being deferred, ensures that the decision tree is fully traversed, with all decision points receiving due consideration from the user.

In some embodiments, the user interface is configured to provide a navigational aid to indicate a hierarchical relationship of the currently presented user-interaction element to other user-interaction elements within the decision tree. Referring back to FIG 3, as shown, the user interface 300 provides a navigational aid (as represented by reference numeral 304). In the exemplary illustration of FIG 3, the user interface 300 includes the navigational aid 304 in the form of breadcrumbs, which indicates position of the current node within the hierarchy of the decision tree and the nodes it depends on. The navigational aid serves as a visual or interactive tool embedded within the user interface, offering users a contextual reference that maps out the progression and dependencies among the nodes. This feature provides users with a clear understanding of their current position within the structure of the decision tree. Further, this enhancement to the user interface addresses the potential complexity and navigational challenges inherent in traversing decision trees, particularly those with multiple layers and branching paths.

In some embodiments, the user interface is configured to provide a progress indication to represent a ratio of nodes marked as complete to a total number of nodes, including the nodes corresponding to the user-interaction elements previously deferred, in the decision tree. Referring again to FIG 3, as shown, the user interface 300 provides a progress indication (as represented by reference numeral 306). In the exemplary illustration of FIG 3, the user interface 300 integrates the progress indication 306 in the form of a bar that visually represents the current progress of the user through the decision tree. The progress indication serves as a dynamic visual representation of the user's advancement through the decision tree. This progress indication is designed to reflect the ratio of nodes marked as complete to the total number of nodes within the decision tree, inclusive of those nodes corresponding to user-interaction elements that were previously deferred. The progress indication helps users recognize their progression as they navigate through the decision tree. By quantifying the completion status of the decision tree in a visually accessible manner, users can estimate the remaining tasks to achieve full navigation through the decision tree.

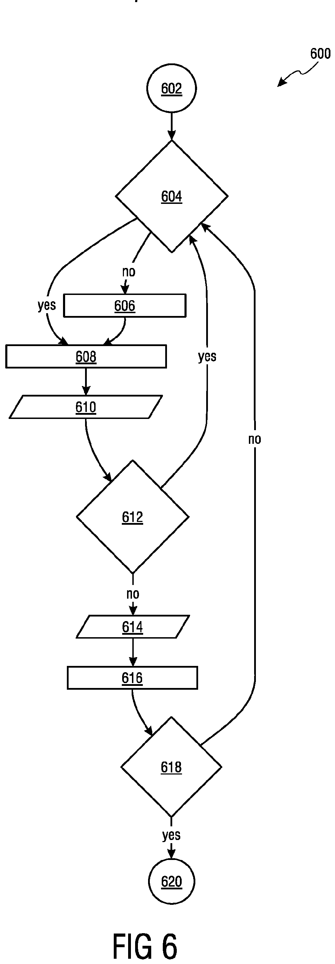

Referring to FIG 6, illustrated is a schematic of a process (as represented by reference numeral 600) for navigating a decision tree in a user interface. The process 600 is based on the method 100 as discussed in the preceding paragraphs. The process 600 provides a systematic approach to decision tree navigation that starts with the user initiating the process, at block 602. At block 604, the process 600 determines if there are any reachable nodes within the decision tree at which the user can arrive. If the decision tree has no remaining reachable nodes, indicating that all immediate decision points have been addressed, the process proceeds to block 606. This action resets the status of nodes that were previously deferred, thereby reintroducing them into the sequence of user-interaction elements for presentation in the user interface. When reachable nodes are present, the process advances to block 608, where the user is presented with the subsequent user-interaction element corresponding to the next decision point in the decision tree.

At this stage, the user may choose to defer the node, at block 610. The process 600 then assesses whether the subsequent node is marked as deferred, at block 612. If the next node is not deferred, the user is prompted to provide input for the currently presented user-interaction element, at block 614. Upon receiving the user's selection, the corresponding node is then marked as complete, at block 616, indicating that the user has engaged with and resolved the decision point. Finally, the process 600 conducts a continuous check to determine the completion status of the decision tree (i.e., are all nodes complete) at block 618. Upon all nodes being marked as complete, the process 600 concludes the decision tree navigation, at block 620. This signifies that the user has navigated through the entire decision tree, making selections at all decision points, and ensuring that no node, including those previously deferred, remains unaddressed.

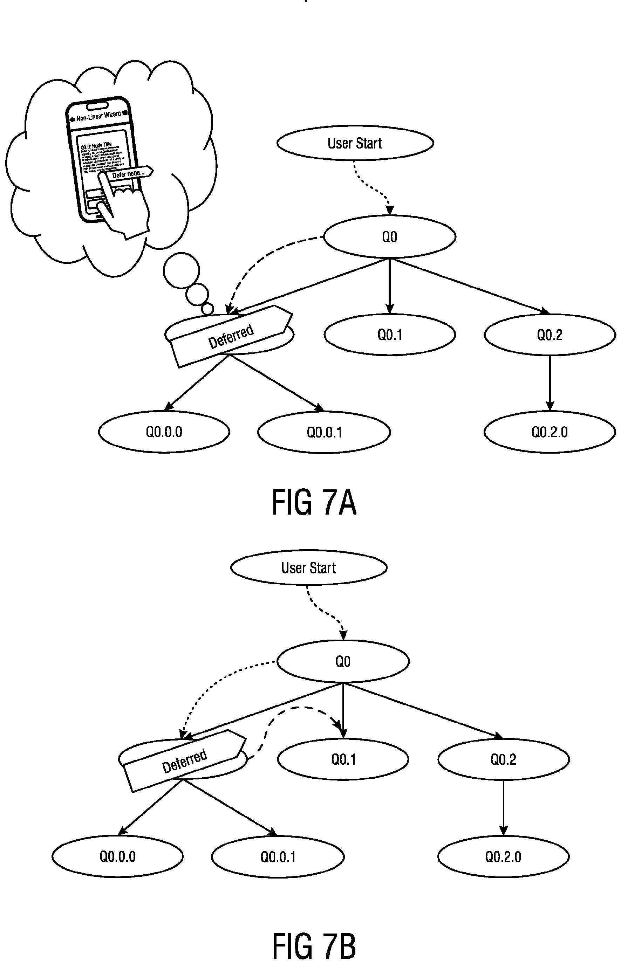

Referring now to FIGS 7A-7D, illustrated are sequential stages of the deferred tree traversal algorithm as employed in the user interface of the present invention. FIGS 7A-7D demonstrate the user interaction with the decision tree and response of the algorithm to user actions.

FIG 7A represents an initial stage in the decision tree traversal where the user has initiated interaction with the decision tree, as denoted by "User Start." At this juncture, the user, through a user gesture such as swiping, marks the node Q0.0 as deferred. The user interface, in response to this action, visually indicates the deferred status of node Q0.0, and as a result, this node, along with its dependent nodes, Q0.0.0 and Q0.0.1, become inaccessible for immediate decision-making.

In FIG 7B, the traversal logic of the decision tree redirects the user to the next node, changing the current focus from the deferred node Q0.0 to node Q0.1. Node Q0.0 remains marked as deferred, which prevents the user from reaching its dependent nodes. This redirection ensures that the user continues to engage with the decision tree despite the deferral action taken previously.

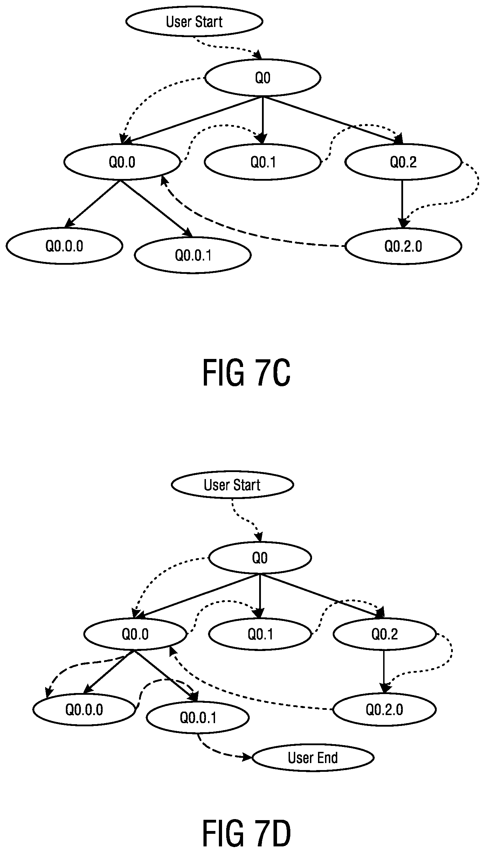

In FIG 7C, the user successfully completes interactions with node Q0.1 and subsequently node Q0.2, neither of which have dependent nodes requiring completion prior to advancing. Upon completion of node Q0.2 and its dependent node Q0.2.0, the traversal algorithm reaches a state where no additional nodes are immediately reachable. At this point, all deferred flags are cleared, which reinstates node Q0.0 as active within the decision tree, requiring the user to revisit and interact with this node.

FIG 7D depicts the conclusion of the deferred tree traversal process. The user re-engages with node Q0.0, which must now be completed since no alternative independent nodes are available for navigation. The completion of node Q0.0 leads to the presentation of its dependent nodes, which the user may choose to interact with or defer as before. This cycle continues until all nodes, including any that were previously deferred, are marked as complete. When the user has interacted with and completed all nodes within the decision tree, the process reaches the "User End" point, indicating the comprehensive conclusion of the decision tree navigation and marking the wizard as complete.

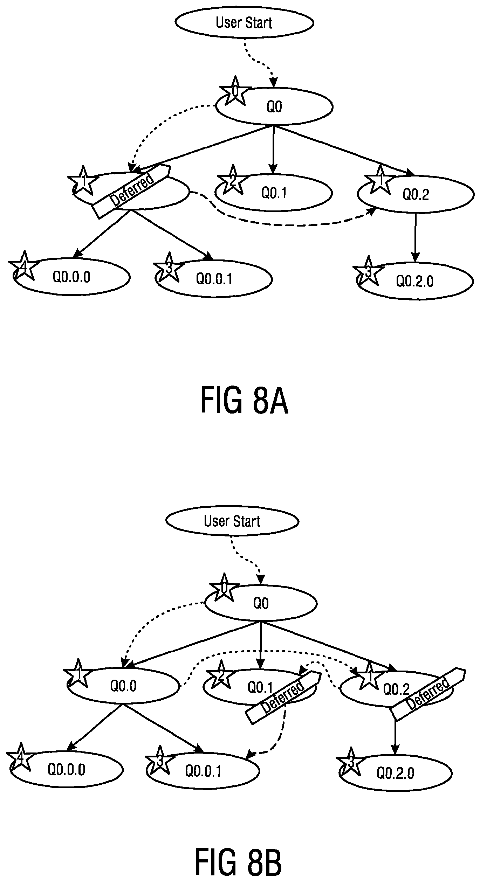

Referring now to FIGS 8A-8E, illustrated are stages of prioritized deferred tree traversal algorithm, showcasing how priorities assigned to nodes can influence the sequence in which nodes are presented for user interaction.

In FIG 8A, a scenario is considered where a node Q0.0 is marked as deferred. This decision triggers the algorithm to assess the priority values assigned to the remaining independent nodes, which in this case are nodes Q0.1 and Q0.2. The node with the higher priority, as indicated by a lower numerical value, will be presented next. In the depicted example, node Q0.2, having a higher priority than Q0.1, becomes the next focus of the user interface, guiding the user's traversal through the decision tree accordingly.

In FIG 8B, the scenario evolves with node Q0.0 being marked as complete. Subsequently, the algorithm directs the user to the next highest priority independent node, which is Q0.2. However, if node Q0.2 is also deferred, the algorithm adjusts to navigate towards Q0.1. Should Q0.1 be deferred as well, the algorithm is designed to identify and present the next highest priority node, now among the dependent nodes of Q0.0, since it has been marked as complete. In this instance, the child node Q0.0.1 is the recipient of this priority and is thus presented next.

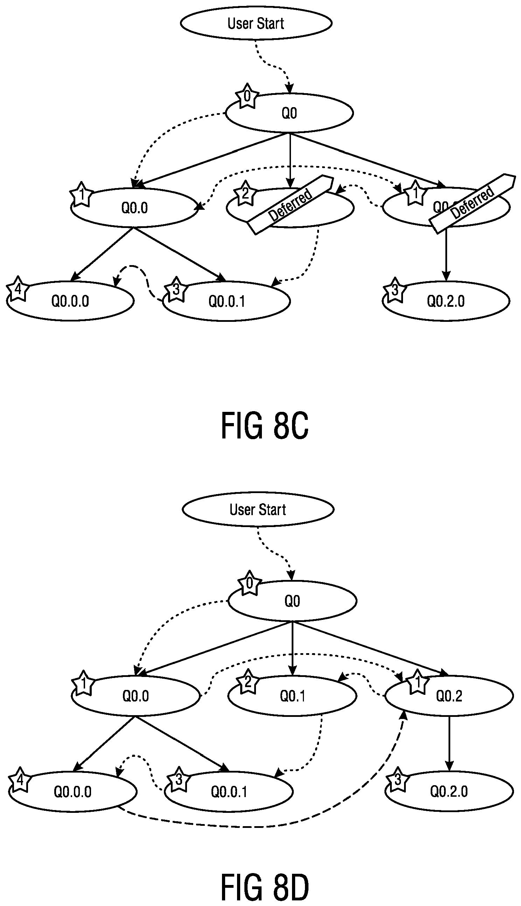

FIG 8C illustrates the continuation of the process when node Q0.0.1 is completed, leading to the user interface presenting node Q0.0.0 as the next reachable decision point. At this stage, the algorithm constrains the user from deferring further, due to the absence of other independent nodes, compelling the completion of node Q0.0.0.

Upon completion, as depicted in FIG 8D, the algorithm reassesses the decision tree and, finding that the deferred flags have been cleared, presents nodes Q0.1 and Q0.2 as now reachable. Given the priority levels, node Q0.2 is prioritized for presentation within the user interface.

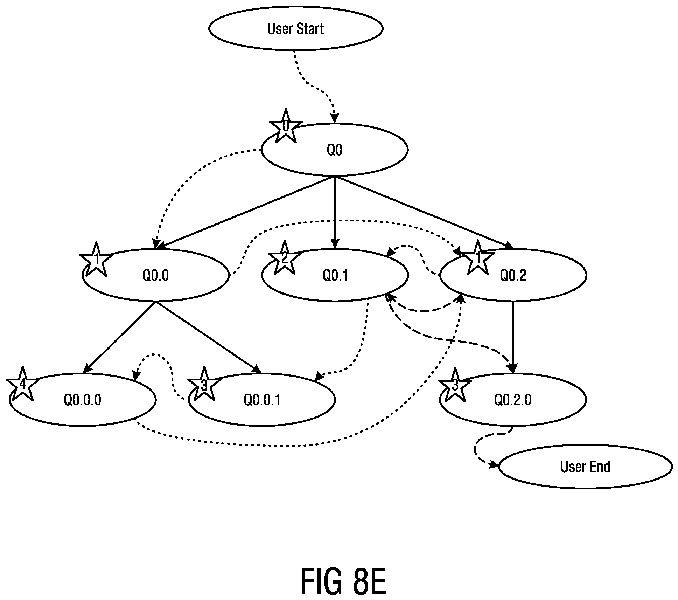

FIG 8E depicts the final steps of the algorithm, where the user sequentially engages with the remaining nodes, guided by the assigned priorities and deferral statuses, until all nodes are marked as complete. This marks the end of the process, denoted by "User End," signifying the completion of the entire decision tree navigation.

The method 100 and the system 200 of the present invention contributes to the field of user interface design, specifically addressing the navigation of decision trees within wizards. Traditionally, wizards have adhered to a linear progression of decision points, which necessitated users to address each question sequentially without the possibility of deferral. The method 100 and the system 200 introduce the capability for users to defer decision points, effectively allowing for the postponement of specific user-interaction elements within the decision tree until a later time. This mechanism inherently reduces decision fatigue by accommodating the user's preference to address decision points at an appropriate moment, thereby aligning the decision-making process more closely with the user's situational context.

The method 100 and the system 200 of the present invention provide modern and user-friendly interface, which is responsive to the unique and evolving needs of each user. In contrast to classical wizard workflows, where the traversal logic is typically rigid and predetermined, the method 100 and the system 200 provide a flexible navigation path that can be adjusted in realtime based on user input or through external algorithms, such as AI/ML models that infer the user's current context or system state. This adaptability represents a clear advancement over traditional methods, empowering users to tailor the decision-making process to their immediate needs and preferences. Furthermore, the method 100 and the system 200 of the present invention streamlines the development and testing processes associated with wizard design. Additionally, the method 100 and the system 200 support upgrading legacy systems. The method 100 and the system 200 reduce both the time and effort required to develop and validate wizard workflows. This efficiency accelerates the development cycle, and enhances the reliability and performance of the final product.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

Further embodiments
1. A computer-implemented method for navigating a decision tree in a user interface, the method comprising:
   presenting, via the user interface, a sequence of user-interaction elements corresponding to nodes within the decision tree based on a predefined traversal logic therefor, wherein each node represents a decision point with two or more user-selectable options associated therewith;
   detecting a deferral action for a currently presented user-interaction element, wherein the deferral action is indicative of postponing the decision associated with the node corresponding to the currently presented user-interaction element;
   adjusting the predefined traversal logic of the decision tree in response to the deferral action, to temporarily stop presentation of the currently presented user-interaction element and user-interaction elements corresponding to dependent nodes thereof;
   presenting, via the user interface, subsequent user-interaction elements according to the predefined traversal logic, for receiving user selections for the two or more user-selectable options associated therewith, wherein each user selection results in marking the corresponding node as complete;
   re-presenting, via the user interface, the user-interaction elements as previously deferred when rest of the nodes of the decision tree are marked as complete, for receiving user selections for the two or more user-selectable options associated therewith, wherein each user selection results in marking the corresponding node as complete; and
   terminating the navigation of the decision tree when all of the nodes of the decision tree, including the nodes corresponding to the user-interaction elements previously deferred, are marked as complete.
2. The method of embodiment 1 further comprising adjusting the predefined traversal logic based on user pre-assigned preferences to each node.
3. The method of embodiment 1 further comprising adjusting the predefined traversal logic based on one or more of user behaviour patterns, time spent on specific user-interaction element, frequency of deferral actions, and operational state of the user interface.
4. The method of embodiment 1 further comprising:
   allowing a user, via the user interface, to mark a user-interaction element as favourite; and
   re-presenting the user-interaction elements as previously deferred and marked as the favourite to be presented before other user-interaction elements as previously deferred, within the predefined traversal logic of the decision tree.
5. The method of embodiment 1, wherein the user interface is configured to provide a navigational aid to indicate a hierarchical relationship of the currently presented user-interaction element to other user-interaction elements within the decision tree.
6. The method of embodiment 1, wherein the user interface is configured to provide a progress indication to represent a ratio of nodes marked as complete to a total number of nodes, including the nodes corresponding to the user-interaction elements previously deferred, in the decision tree.
7. The method of embodiment 1, wherein the user-interaction elements are presented as card elements in the user interface.
8. The method of embodiment 1, wherein the deferral action is executed, via the user interface, by a user gesture on the currently presented user-interface element.
9. A system comprising:
   one or more processing units; and
   a memory unit communicatively coupled to the one or more processing units, wherein the memory unit comprises a decision tree navigation module stored in the form of machine-readable instructions executable by the one or more processing units, wherein the decision tree navigation module is configured to perform method steps for navigating a decision tree in a user interface, according to any of the claims 1 to 8.
10. A computer-program product having machine-readable instructions stored therein, which when executed by one or more processing units, cause the one or more processing units to perform a method according to any of the claims 1 to 8.

**Reference Numerals**

| | |
|---|---|
| method | 100 |
| step | 110 |
| step | 120 |
| step | 130 |
| step | 140 |
| step | 150 |
| step | 160 |
| system | 200 |
| bus | 202 |
| processing unit | 204 |
| memory unit | 206 |
| interface | 208 |
| database | 210 |
| input device | 212 |
| output device | 214 |
| decision tree navigation module | 216 |
| user interface | 300 |
| user-interaction element | 302 |
| navigational aid | 304 |
| progress indication | 306 |
| user interface | 400 |
| user-interface element | 402 |
| user gesture | 404 |
| user interface | 500 |
| favourite button | 502 |
| process | 600 |
| block | 602 |
| block | 604 |
| block | 606 |
| block | 608 |
| block | 610 |
| block | 612 |
| block | 614 |
| block | 616 |
| block | 618 |
| block | 620 |

## Claims

1. A computer-implemented method for navigating a decision tree in a user interface, the method comprising:
presenting, via the user interface, a sequence of user-interaction elements corresponding to nodes within the decision tree based on a predefined traversal logic therefor, wherein each node represents a decision point with two or more user-selectable options associated therewith;
detecting a deferral action for a currently presented user-interaction element, wherein the deferral action is indicative of postponing the decision associated with the node corresponding to the currently presented user-interaction element;
adjusting the predefined traversal logic of the decision tree in response to the deferral action, to temporarily stop presentation of the currently presented user-interaction element and user-interaction elements corresponding to dependent nodes thereof;
presenting, via the user interface, subsequent user-interaction elements according to the predefined traversal logic, for receiving user selections for the two or more user-selectable options associated therewith, wherein each user selection results in marking the corresponding node as complete;
re-presenting, via the user interface, the user-interaction elements as previously deferred when rest of the nodes of the decision tree are marked as complete, for receiving user selections for the two or more user-selectable options associated therewith, wherein each user selection results in marking the corresponding node as complete; and
terminating the navigation of the decision tree when all of the nodes of the decision tree, including the nodes corresponding to the user-interaction elements previously deferred, are marked as complete.

2. The method of claim 1 further comprising adjusting the predefined traversal logic based on user pre-assigned preferences to each node.

3. The method according to any of the preceding claims, further comprising adjusting the predefined traversal logic based on one or more of user behaviour patterns, time spent on specific user-interaction element, frequency of deferral actions, and operational state of the user interface.

4. The method according to any of the preceding claims, further comprising:
allowing a user, via the user interface, to mark a user-interaction element as favourite; and
re-presenting the user-interaction elements as previously deferred and marked as the favourite to be presented before other user-interaction elements as previously deferred, within the predefined traversal logic of the decision tree.

5. The method according to any of the preceding claims, wherein the user interface is configured to provide a navigational aid to indicate a hierarchical relationship of the currently presented user-interaction element to other user-interaction elements within the decision tree.

6. The method according to any of the preceding claims, wherein the user interface is configured to provide a progress indication to represent a ratio of nodes marked as complete to a total number of nodes, including the nodes corresponding to the user-interaction elements previously deferred, in the decision tree.

7. The method according to any of the preceding claims, wherein the user-interaction elements are presented as card elements in the user interface.

8. The method according to any of the preceding claims, wherein the deferral action is executed, via the user interface, by a user gesture on the currently presented user-interface element.

9. A system comprising:
one or more processing units; and
a memory unit communicatively coupled to the one or more processing units, wherein the memory unit comprises a decision tree navigation module stored in the form of machine-readable instructions executable by the one or more processing units, wherein the decision tree navigation module is configured to perform method steps for navigating a decision tree in a user interface, according to any of the claims 1 to 8.

10. A computer-program product having machine-readable instructions stored therein, which when executed by one or more processing units, cause the one or more processing units to perform a method according to any of the claims 1 to 8.
